Europäisches Patentamt

European Patent Office

Office européen des brevets

(11) Veröffentlichungsnummer: **0 032 529**
**B1**

(12) **EUROPÄISCHE PATENTSCHRIFT**

(45) Veröffentlichungstag der Patentschrift:
**23.03.83**

(51) Int. Cl.³: **B 60 T 17/22,** B 60 T 8/18

(21) Anmeldenummer: **80106615.0**

(22) Anmeldetag: **29.10.80**

(54) **Bremskraftregler.**

(30) Priorität: **18.01.80 DE 3001679**

(43) Veröffentlichungstag der Anmeldung:
**29.07.81 Patentblatt 81/30**

(45) Bekanntmachung des Hinweises auf die Patenterteilung:
**23.03.83 Patentblatt 83/12**

(84) Benannte Vertragsstaaten:
**AT BE CH DE FR GB IT LI LU NL SE**

(56) Entgegenhaltungen:
**DE-A-2 036 161**
**DE-A-2 427 779**
**DE-A-2 457 008**
**DE-A-2 815 931**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Fauck, Gerhard, Tiergartenstrasse 156, D-3000 Hannover 71 (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Bremskraftregler

Die Erfindung betrifft einen lastabhängig regelnden Bremskraftregler in Druckmittelbremsanlagen von Fahrzeugen, deren Federung pneumatisch ausgelegt oder mit hydraulischem Achsausgleich ausgerüstet ist, gemäß dem Oberbegriff des Anspruchs 1.

Bremskraftregler unterliegen wie alle anderen in einer Druckmittelbremsanlage angeordneten Ventile bei den vom Gesetzgeber vorgeschriebenen Bremsenuntersuchungen einer Dichtheitsprüfung, wobei bei Bremskraftreglern außerdem die Druckeinstellungen in den Regelstellungen »Leer«, »Halblast« und »Vollast« geprüft werden.

Diese Prüfstellungen kann man bei von der Durchbiegung der Federung mechanisch gesteuerten Bremskraftreglern in einfacher Weise von Hand schalten, während bei Fahrzeugen mit pneumatischen oder mechanischen mit hydraulischem Achsausgleich versehenen Federungen der Steueranschluß des Bremskraftreglers, der mit dem Steuerdruck beaufschlagt wird, an eine Druckmittelquelle angeschlossen werden muß, um auf diese Weise die im Fahrbetrieb von den Beladungsbedingungen des Fahrzeuges erzeugten Steuerdrücke zu simulieren.

Nach den neuesten Erkenntnissen wird eine optimale Bremskraftregelung eines pneumatisch oder mit hydraulischem Achsausgleich gefederten Fahrzeuges durch die lastabhängige Steuerung des Bremskraftreglers mit einem aus dem Druck der Federungskörper beider Fahrzeugseiten gebildeten Mittelwert erzielt, indem der vom Steuerdruck beaufschlagbare Regelkolben des Bremskraftreglers z. B. als Stufenkolben ausgebildet ist, dessen gleichgroße Steuerflächen über zwei Anschlüsse mit dem Steuerdruck zweier Fahrzeugseiten beaufschlagbar sind. Ein Bremskraftregler dieser Bauart ist aus der DE-OS 2 457 008 bekannt.

Da ein Bremskraftregler der beschriebenen Art zwei Steueranschlüsse besitzt, müssen bei einer Bremsenuntersuchung zwei Prüfschläuche angeschlossen werden, deren Zusammenführung in Richtung Druckmittelquelle über ein T-Stück erfolgt. Abgesehen von der Tatsache, daß bei einer Bremsenuntersuchung zwei Schutzkappen abgeschraubt und Anschlüsse wieder angeschraubt werden müssen, kann es vorkommen, daß versehentlich nur ein Prüfschlauchteil angeschraubt wird, so daß dann durch diesen Fehler falsche Prüfergebnisse entstehen können.

Der Erfindung liegt die Aufgabe zugrunde, für einen Bremskraftregler der eingangs genannten Art eine Prüfanschlußmöglichkeit zu schaffen, bei welcher der für alle anderen Prüfanschlüsse der Bremsanlage verwendbare einteilige Prüfschlauch angeschlossen werden kann, ohne daß die zu den Federungskörpern führenden Anschlüsse gelöst werden müssen.

Diese Aufgabe wird durch die im Patentanspruch 1 angegebene Erfindung gelöst.

Die serienmäßige Anordnung eines sogenannten Prüfanschlusses, dessen Schaltglied beim Anschrauben des Prüfschlauches automatisch eine Stellung einnimmt, welche die Verbindung zu den Federungskörpern unterbricht und stattdessen eine Verbindung über einen einzigen Anschluß zwischen der Druckmittelquelle und den beiden Steuerflächen des Stufenkolbens herstellt, hat den Vorteil, daß zum Prüfen nur ein einziger Handgriff erforderlich ist, wobei ein Fehler praktisch unmöglich ist.

Vorteilhafte Ausgestaltungen der Erfindung sind den Unteransprüchen zu entnehmen.

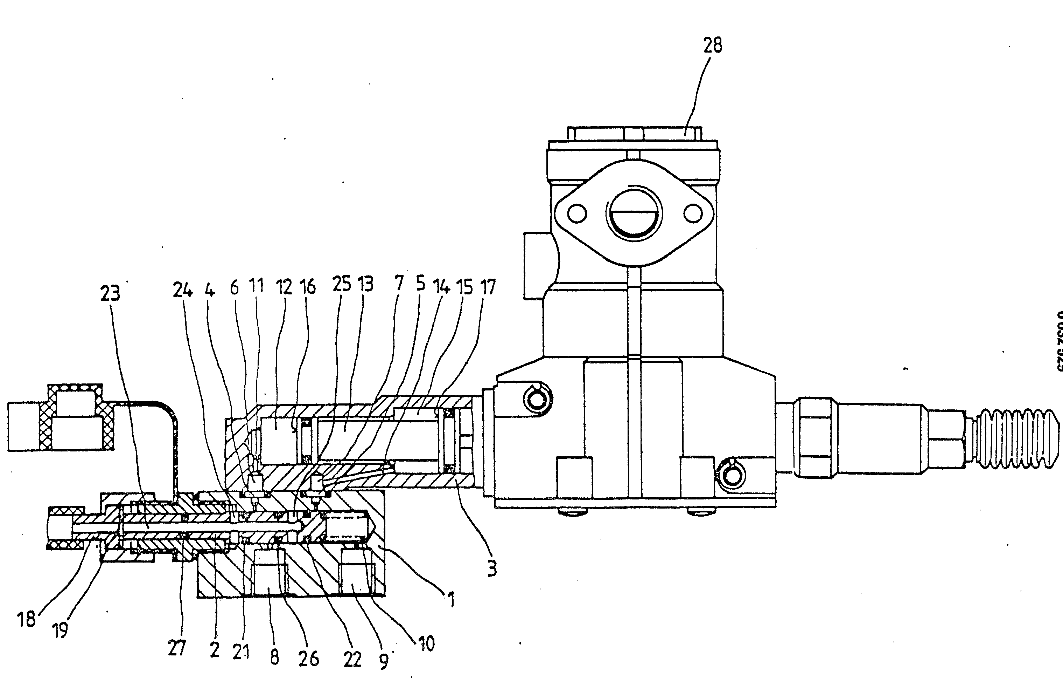

Die Erfindung wird nun anhand eines Ausführungsbeispieles, welches in der Zeichnung dargestellt ist, näher erläutert.

Die Fig. zeigt einen mit den Steueranschlüssen eines Bremskraftreglers verbundenen und an dessen Gehäuse angeflanschten Prüfanschluß.

Ein aus einem Gehäuse 1 und aus einem Schaltglied 2 bestehender Prüfanschluß ist derart an das Gehäuse 3 eines nur in Umrissen dargestellten Bremskraftreglers 28 angeflanscht, daß Auslaßöffnungen 4 und 5 des Prüfanschluß-Gehäuses 1 mit Einlaßöffnungen 6 und 7 des Bremskraftregler-Gehäuses 3, welche ursprünglich als Anschlüsse für die Druckmittelzuführung aus den Federungskörpern dienten, sich überdecken. Anstelle der nunmehr mit den Öffnungen 4 und 5 des Prüfanschlusses direkt verbundenen Öffnungen 6 und 7 sind entsprechende, als Anschlüsse für die Federungskörper dienende Einlaßöffnungen 8 und 9 am Gehäuse 1 vorgesehen.

Bei normalem Fahrbetrieb wird das Schaltglied 2 durch die Kraft einer Feder 10 in der dargestellten Lage festgehalten. Dabei besteht freier Druchgang der von den nicht dargestellten Federungskörpern bzw. dem Achsausgleich der einen Fahrzeugseite einströmenden Druckmittel über den Anschluß 8, die Öffnungen 4 und 6 und einen Kanal 11 in die erste Steuerkammer 12 eines Stufen-Steuerkolbens 13 und von den Federungskörpern bzw. dem Achsausgleich der anderen Fahrzeugseite über den Anschluß 9, die Öffnungen 5 und 7 und einen Kanal 14 in die zweite Steuerkammer 15 des Stufen-Steuerkolbens 13. Die von den genannten Drücken beaufschlagten Steuerflächen 16 und 17 des Steuerkolbens 13 sind gleichgroß. Somit wird der Steuerkolben 13 von einer Steuerkraft beaufschlagt, die einen Mittelwert der Belastung beider Fahrzeugseiten darstellt.

Beim Aufschrauben des Anschlußstückes 18 eines nicht dargestellten Prüfschlauches auf einen Anschluß 19 des Prüfanschlusses wird das Schaltglied 2 gegen die Kraft der Feder 10 in eine Schaltstellung bewegt, welche die Verbindungen zwischen den Anschlüssen 8 und 9 und den Öffnungen 4 und 5 mit Dichtungen 21 und 22 abdichtet und gleichzeitig eine Verbindung des über den Anschluß 19 einströmenden Druckmittels einer nicht dargestellten Druckmittelerzeugeranlage über Kanäle 23 und 24 bzw. 25 mit den Öffnungen 4 und 5 herstellt. Beide Steuerflächen 16 und 17 des Stufen-Steuerkolbens 13 können somit mit einem den Druck in den Federungskörpern bzw. dem Achsausgleich simulierenden Druck beaufschlagt werden.

Beim Abschrauben des Prüfschlauch-Anschlußstückes 18 drückt die Feder 10 das Schaltglied 2 in seine Ausgangsstellung zurück.

**Patentansprüche**

1. Lastabhängig regelnder Bremskraftregler (28) in Druckmittelbremsanlagen von Fahrzeugen, deren Federung pneumatisch ausgelegt oder mit hydraulischem Achsausgleich ausgerüstet ist, welcher folgende Merkmale umfaßt:

a) die lastabhängige Regelstellung des Bremskraftreglers (28) wird von einem vom lastabhängigen Druck der pneumatischen Federung oder des hydraulischen Achsausgleiches gesteuerten Regelkolben (13) geschaltet;

b) der Regelkolben (13) ist als Stufenkolben ausgelegt und verfügt über zwei vom Druck der pneumatischen Federung oder des hydraulischen Achsausgleiches beaufschlagbare Steuerflächen (16, 17);

c) die erste Steuerfläche (16) ist über eine erste Einlaßöffnung (6) von einem ersten Steuerdruck und die zweite Steuerfläche (17) ist über eine zweite Einlaßöffnung (7) von einem zweiten Steuerdruck beaufschlagbar,

gekennzeichnet durch folgende Merkmale:

d) ein mit drei Einlaßöffnungen (8, 9, 19) und zwei Auslaßöffnungen (4, 5) versehener Prüfanschluß ist derart an das Gehäuse (3) des Bremskraftreglers (28) angeflanscht, daß sich die beiden Auslaßöffnungen (4, 5) mit den für die Steuerung des Regelkolbens (13) vorgesehene Einlaßöffnungen (6, 7) decken;

e) zwei der drei Einlaßöffnungen (8, 9, 19) des Prüfanschlusses sind als Steuer-Anschlußöffnungen (8, 9) für die Ansteuerung mit dem Steuerdruck beider Fahrzeugseiten vorgesehen;

f) eine der drei Einlaßöffnungen (8, 9, 19) ist als Prüf-Anschlußöffnung (19) für das Anschlußstück (18) eines mit einer Druckmittelquelle verbundenen Prüfschlauches vorgesehen;

g) es sind Schaltmittel (2) vorgesehen, welche den Prüfanschluß in zwei Stellungen schalten, wobei in der ersten Schaltstellung zwei getrennte Verbindungen zwischen den beiden vom Druck der pneumatischen Federung oder des hydraulischen Achsausgleiches beaufschlagten Steuer-Anschlußöffnungen (8, 9) und den Auslaßöffnungen (4, 5) bestehen und in der zweiten Schaltstellung diese Verbindungen unterbrochen sind und stattdessen eine Verbindung zwischen der mit dem Prüfschlauch verbundenen Prüf-Anschlußöffnung (19) und den beiden Auslaßöffnungen (4, 5) hergestellt ist.

2. Bremskraftregler nach Anspruch 1, der durch folgende Merkmale gekennzeichnet ist:

a) als Schaltmittel ist ein kolbenförmiges Schaltglied (2) im Gehäuse (1) des Prüfanschlusses in zwei Stellungen verschiebbar angeordnet;

b) eine Feder (10) ist derart angeordnet, daß deren Kraft das Schaltglied (2) in Richtung der ersten Schaltstellung beaufschlagt.

3. Bremskraftregler nach Ansprüchen 1 und 2, gekennzeichnet durch folgendes Merkmal:
Das Anschlußstück (18) des Prüfschlauches ist derart ausgebildet, daß es beim Anschließen an die Prüf-Anschlußöffnung (19) das Schaltglied (2) in die zweite Schaltstellung gegen die Kraft der Feder (10) bewegt.

4. Bremskraftregler nach Ansprüchen 1 bis 3, gekennzeichnet durch folgendes Merkmal:
Das Schaltglied (2) ist mit Kanälen (23, 24, 25) versehen, welche in der zweiten Schaltstellung die Verbindung zwischen der mit dem Prüfschlauch verbundenen Prüf-Anschlußöffnung (19) und den Auslaßöffnungen (4, 5) herstellen.

5. Bremskraftregler nach einem der vorhergehenden Ansprüche, gekennzeichnet durch folgendes Merkmal:
Es sind Dichtringe (21, 22, 26, 27) vorgesehen, welche sowohl in der ersten Schaltstellung ein Überströmen der von dem über die Steuer-Anschlußöffnungen (8, 9) einströmenden Druckmittel zur Prüf-Anschlußöffnung (19) als auch in der zweiten Schaltstellung zwischen den beiden mit den Auslaßöffnungen (4, 5) verbundenen Kanälen (24, 25) und der Prüf-Anschlußöffnung (19) verhindern.

**Claims**

1. Load-controlled brake force regulator (28) in the pressure medium brake systems of vehicles having pneumatic suspension or equipped with hydraulic axle compensation, which regulator includes the following features:

a) the load-controlled regulating setting of the brake force regulator (28) is switched by a regulating piston (13) controlled by the load-dependent pressure of the pneumatic suspension or the hydraulic axle compensation;

b) the regulating piston (13) is in the form of a stepped piston and has two control surfaces (16, 17) which can be acted upon by the pressure of the pneumatic suspension or the hydraulic axle compensation;

c) the first control surface (16) can be acted upon, via a first inlet opening (6), by a first control pressure, and the second control surface (17) can be acted upon, via a second inlet opening (7), by a second control pressure,

characterised by the following features:

d) a test connection provided with three inlet openings (8, 9, 19) and two outlet openings (4, 5) is flanged to the housing (3) of the brake force regulator (28) in such a manner that the two outlet openings (4, 5) coincide with the inlet openings (6, 7) provided for the control of the regulating piston (13);

e) two of the three inlet openings (8, 9, 19) of the test connection are provided as control connection openings (8, 9) for receiving the control pressure of both sides of the vehicle;

f) one of the three inlet openings (8, 9, 19) is provided as a test connection opening (19) for the connection piece (18) of a flexible test pipe connected to a pressure medium source;

g) switching means (2) are provided which switch the test connection into two positions; in the first switched position there are two separate connections between the two control connection openings (8, 9), acted upon by the pressure of the pneumatic suspension or the hydraulic axle compensation, and the outlet openings (4, 5), and, in the second switched position, these connections are interrupted and, instead, a connection is produced between the test connection opening (19), connected to the flexible test pipe, and the two outlet openings (4, 5).

2. Brake force regulator according to claim 1, which is characterised by the following features:

a) a piston-shaped switching member (2) is arranged as a switching means in the housing (1) of the test connection in such a manner that it can be pushed into two positions;

b) a spring (10) is so arranged that its force acts on the switching member (2) in the direction of the first switched position.

3. Brake force regulator according to claims 1 and 2, characterised by the following feature:
The connection piece (18) of the flexible test pipe is so designed that, when connected to the test connection opening (19), it moves the switching member (2) into the second switched position against the force of the spring (10).

4. Brake force regulator according to claims 1 to 3, characterised by the following feature:
The switching member (2) is provided with passages (23, 24, 25) which, in the second switched position, produce the connection between the test connection opening (19), connected to the flexible test pipe, and the outlet openings (4, 5).

5. Brake force regulator according to any one of the preceding claims, characterised by the following feature:
Sealing rings (21, 22, 26, 27) are provided which, in the first switched position, prevent the pressure medium, flowing in via the control connection openings (8, 9), from passing into the test connection opening (19), and, in the second switched position, from passing between the two passages (24, 25), connected to the outlet openings (4, 5), and the test connection opening (19).

**Revendications**

1. Régulateur de force de freinage (28) en fonction de la charge dans des équipements de freinage par fluide sous pression de véhicules dont la suspension est pneumatique ou équipée d'une égalisation hydraulique de la charge des essieux, présentant les particularités suivantes:

a) la position de réglage en fonction de la charge du régulateur de force de freinage (28) est commutée par un piston de réglage (13), commandé par la pression fonction de la charge dans la suspension pneumatique ou l'égalisation hydraulique de charge des essieux;

b) le piston de réglage (13) est réalisé sous forme d'un piston étagé et présente deux faces de commande (16, 17) chargées par la pression des éléments de suspension ou de l'égalisation hydraulique de la charge des essieux;

c) une première pression de commande charge la première face de commande (16) par un premier orifice d'entrée (6) et une seconde pression de commande charge la seconde face de commande (17) par un second orifice d'entrée (7),

et caractérisé en ce que:

d) un raccord de contrôle, présentant trois orifices d'entrée (8,9, 19) et deux orifices de sortie (4, 5) est fixé par bride sur le corps (3) du régulateur de force de freinage (28) de façon que les deux orifices de sortie (4, 5) se superposent aux orifices d'entrée (6, 7) prévus pour la commande du piston de réglage (13);

e) deux des orifices d'entrée (8, 9, 19) du raccord de contrôle sont prévus comme orifice de raccordement (8, 9) pour la commande par la pression de commande des deux côtés du véhicule;

f) un des trois orifices d'entrée (8, 9, 19) est prévu comme orifice de raccordement de contrôle (19) du raccord (18) d'un flexible de contrôle relié à une source de fluide sous pression;

g) des moyens de commutation (2) sont prévus, qui commutent le raccord de contrôle sur deux positions, dont la première établit deux liaisons séparées entre les deux orifices de raccordement de commande (8, 9), chargés par la pression de la suspension pneumatique ou de l'égalisation hydraulique de charge des essieux, et les orifices de sortie (4, 5), et dont la seconde interrompt ces liaisons et établit à la place une liaison entre l'orifice de raccordement de contrôle (19), relié au flexible de contrôle, et les deux orifices de sortie (4, 5).

2. Régulateur de force de freinage selon revendication 1, caractérisé en ce que:

a) les moyens de commutation sont constitués par un élément de commutation (2) en forme de piston et coulissant sur deux positions dans le corps (1) du raccord de contrôle;

b) un ressort (10) est monté de façon que sa force charge l'élément de commutation (2) en direction de la première position de commutation.

3. Régulateur de force de freinage selon revendications 1 et 2, caractérisé en ce que le raccord (18) du flexible de contrôle est réalisé de façon à déplacer, lors du raccordement à l'orifice de contrôle (19), l'élément de commutation (2) vers la seconde position de commutation, contre la force exercée par le ressort (10).

4. Régulateur de force de freinage selon revendications 1 à 3, caractérisé en ce que l'élément de commutation (2) est muni de canaux (23, 24, 25) qui, sur la seconde position de commutation, établissent la liaison entre l'orifice de raccordement de contrôle (19) relié au flexible de contrôle et les orifices de sortie (4, 5).

5. Régulateur de force de freinage selon une quelconque des revendications 1 à 4, caractérisé par des bagues d'étanchéité (21, 22, 26, 27), qui interdisent un écoulement du fluide sous pression entre les orifices de raccordement de commande (8, 9) et l'orifice de raccordement de contrôle (19), sur la première position de commutation, et entre les deux canaux (24, 25) reliés aux orifices de sortie (4, 5) et l'orifice de raccordement de contrôle (19) sur la deuxième position de commutation.